# EUROPÄISCHE PATENTSCHRIFT

(11) **EP 3 236 440 B1**
(45) Veröffentlichungstag und Bekanntmachung des Hinweises auf die Patenterteilung: **03.03.2021**
(21) Anmeldenummer: 16000870.2
(22) Anmeldetag: 18.04.2016
(51) Int. Cl.: G08B 13/196, H04N 5/232, H04N 7/18, G06T 7/00, G01C 11/02, G06T 3/40

(54) **VORRICHTUNG, SYSTEM UND VERFAHREN ZUR MARKIERUNGSFREIEN HANGÜBERWACHUNG UND/ODER BAUÜBERWACHUNG**
DEVICE, SYSTEM AND METHOD FOR MARKING-FREE SLOPE MONITORING AND/OR BUILDING INSPECTION
DISPOSITIF, SYSTEME ET PROCEDE DE SURVEILLANCE DE PENTE ET/OU DE BATIMENT SANS MARQUAGE

(43) Veröffentlichungstag der Anmeldung: 25.10.2017
(73) Patentinhaber: Hesotech GmbH automatisieren - visualisieren, 65582 Diez (DE)
(72) Erfinder: Sonnenschein, Roland, 65589 Hadamar (DE)
(74) Vertreter: Macliing, Trixia

(56) Entgegenhaltungen:
- JP-A- 2012 124 655
- US-A1- 2003 085 992
- US-A1- 2007 052 803
- US-A1- 2013 216 089

## Beschreibung

Die Erfindung betrifft eine Vorrichtung, ein System und ein Verfahren zur markierungsfreien Hangüberwachung und/oder Bauüberwachung.

Ein Erdrutsch ist das Abgleiten größerer Erd- und Gesteinsmassen, meistens ausgelöst durch starke Niederschläge und das dadurch bedingte Eindringen von Wasser zwischen vorher gebundene Bodenschichten. Durch die Schwerkraft und die Verminderung der Haftreibung zwischen den Bodenschichten rutscht der Hang ab. Je nach Lage des betroffenen Hangs und Ausmaß des Erdrutsches können erhebliche wirtschaftliche und menschliche Schäden entstehen. Wird der Erdrutsch rechtzeitig erkannt, kann der Hang durch geeignete Gegenmaßnahmen stabilisiert werden. Dabei stellt sich jedoch das Problem, dass die Erdbewegungen mit einer Geschwindigkeit von typischerweise 1 m/Woche in der Anfangsphase für die Erfassung durch menschliche Beobachter zu langsam verlaufen. Daher sind technische Hilfsmittel notwendig, um gefährdete Hänge zu überwachen und gegebenenfalls rechtzeitig einzugreifen.

Ein geläufiges Verfahren der Hangüberwachung besteht darin, Markierungen im gefährdeten Hang anzubringen, deren Positionen regelmäßig vermessungstechnisch erfasst werden. Die Nachteile dieses Verfahrens liegen darin, dass der Hang zur Anbringung der Markierungen zugänglich sein muss; dass der Hang mit einer begrenzten Anzahl von Markierungen nur lückenhaft überwacht werden kann; dass keine direkte visuelle Beurteilung der Messergebnisse möglich ist, da nur Trajektorien der einzelnen Markierungen erfasst werden; dass die Anbringung der Markierungen und ihre regelmäßige Vermessung aufwendig und teuer sind und dass das Verfahren aufgrund der aufwendigen Vermessungsprozedur keine Echtzeit-Überwachung erlaubt.

Ein weiteres geläufiges Verfahren der Hangüberwachung besteht darin, anstelle passiver Markierungen Global-Positioning-System-(GPS)-Empfänger im gefährdeten Hang anzubringen, die ihre Position automatisch an eine Messstelle übertragen. Vorteilhaft daran ist, dass der Hang in Echtzeit überwacht werden kann. Es bleiben aber die Nachteile, dass der Hang zur Anbringung der GPS-Empfänger zugänglich sein muss und dass der Hang nur lückenhaft überwacht werden kann. Außerdem ist die Anschaffung einer großen Anzahl geeigneter GPS-Empfänger extrem teuer.

Bauherren und Bauleiter, die Baustellen in erheblicher Entfernung von ihrem Firmensitz betreiben oder eine Vielzahl von Bauunternehmen zu koordinieren haben, stehen oft vor dem Problem, dass sie die Arbeiten auf den Baustellen nicht effektiv vor Ort lenken, überwachen und dokumentieren können. Normale Videoüberwachung bietet dabei nur eine unzureichende Lösung, da in der Regel nur wenige festgelegte Blickwinkel und Vergrößerungsstufen zur Verfügung stehen und die Videodaten nicht mit anderen für den Baufortgang relevanten Daten korreliert werden können.

Die Druckschrift CN 102938189 A offenbart eine Methode zur Überwachung von und Frühwarnung vor Erdrutschen, die in der Videobeobachtung eines Messstabs und Erfassung von Bewegungen mittels Computeranalyse besteht. Die Druckschrift KR 101356686 B1 offenbart eine ähnliche Methode zur Erdrutschwarnung. Hier wird ein im Hang installiertes Artefakt gefilmt, und ein Alarmsystem analysiert das aufgenommene Filmmaterial mit Hilfe des Artefakts auf Veränderungen. Beide Methoden entwickeln das vermessungstechnische Verfahren der Hangüberwachung dahingehend weiter, dass die Vermessung einmal im Hang angebrachter Markierungen automatisch und somit schneller und kostengünstiger erfolgt. Es bleiben aber die Nachteile der lückenhaften Überwachung und der Anbringung von Markierungen in schwer zugänglichem Gelände. Zudem können Abschnitte eines Hanges, in denen keine Markierungen angebracht sind, durch diese Verfahren nicht überwacht werden. So kann beispielsweise ein Riss in einem solchen nicht überwachten Hangabschnitt nicht erfasst werden.

Die Druckschrift CN 204539321 U beschreibt ein System zur quantitativen Überwachung von Erdrutschänderungen, bei dem eine Kamera in einem Drahtlosnetzwerk eine Spalte im Hang auf Veränderung überwacht. Dadurch entfällt die Notwendigkeit, Markierungen anzubringen, aber die Überwachung bleibt auf ausgewählte Punkte im Hang beschränkt.

In der Druckschrift JP H03211700 A wird ein automatisches Hangrutschüberwachungsgerät beschrieben. Eine Kamera nimmt regelmäßig Bilder vom Hang auf. Die Unterschiede aufeinanderfolgender Bilder werden berechnet und abhängig von der Unterschiedlichkeit werden eine Warnung und die Bilder an eine Zentrale gesendet und dort gespeichert. Auf diese Weise kann ein gesamter Hang markierungsfrei überwacht werden. Abhängig von der Auflösung der untersuchten Bilder ergibt sich aber entweder bei geringer Auflösung nur eine grobe Überwachung oder bei hoher Auflösung eine sehr große Datenmenge, deren Analyse großen Aufwand erfordert.

Auch die Druckschrift US2013/0216089 offenbart eine Methode und ein System zur Überwachung von Baustrukturen durch Bildaufnahmen.

Angesichts des Standes der Technik ergibt sich die Aufgabe, eine Vorrichtung oder ein System zu schaffen, die oder das zur universell einsetzbaren, vollständigen Hangüberwachung und/oder Bauüberwachung mit geringem Aufwand sowohl bei der Installation als auch während des Betriebs ausgelegt ist.

Diese Aufgabe wird durch eine Vorrichtung gemäß Anspruch 1 gelöst. Weiterhin wird die Aufgabe durch ein System gemäß Anspruch 7 gelöst.

Es ergibt sich außerdem die Aufgabe, ein Verfahren zur universell einsetzbaren, vollständigen Hangüberwachung und/oder Bauüberwachung mit geringem Aufwand sowohl bei der Installation als auch während des Betriebs zu entwickeln.

Diese Aufgabe wird durch ein Verfahren gemäß Anspruch 9 gelöst.

Vorteilhafte Ausführungen ergeben sich aus den Unteransprüchen.

Eine erfindungsgemäße Vorrichtung zur markierungsfreien Hangüberwachung und/oder Bauüberwachung umfasst zumindest eine Kamera, insbesondere eine digitale Fotokamera, die vorzugsweise zur Außenüberwachung ausgelegt ist. Die Vorrichtung umfasst ferner eine Recheneinheit, beispielsweise einen Mikroprozessor, einen Datenspeicher, beispielsweise eine lokalen Festplatte wie ein Solid State Drive oder eine kommunikative Anbindung an einen Cloud-basierten Speicher, und eine Kommunikationseinheit, beispielsweise eine drahtlose Kommunikationseinheit wie ein LTE-Modul. Die genannten Komponenten sind untereinander, zum Beispiel durch Kabel, kommunikativ verbunden. Das Objekt einer Hangüberwachung kann beispielsweise ein erdrutschgefährdeter Hang und/oder ein Abbaubereich eines Tagebaubergwerks sein. Das Objekt einer Bauüberwachung kann ein beliebiges, insbesondere ein im Bau befindliches, Bauwerk sein, beispielsweise ein Haus, ein Turm, eine Brücke, ein Tunnel oder ein Fahrzeug wie ein Schiff, Landfahrzeug oder Flugzeug. Eine Kamera im Sinne der Erfindung kann Bilder mit sichtbarem und/oder infrarotem Licht aufnehmen. Aufnahmen mit infrarotem Licht bieten den Vorteil, dass sie auch nachts ohne für Anwohner oder Wildtiere störende Beleuchtung aufgenommen werden können.

Die Kamera einer erfindungsgemäßen Vorrichtung ist zur mosaikartigen Aufnahme von überlappenden Einzelbildern des gesamten Beobachtungsbereichs in mehreren Vergrößerungsstufen ausgelegt. Die Recheneinheit einer erfindungsgemäßen Vorrichtung ist dazu ausgelegt, aus den Einzelbildern verschiedener Vergrößerungsstufen ein Gesamtbild mit den Vergrößerungsstufen entsprechenden Ebenen zusammenzusetzen. Vorteilhaft daran ist, dass durch die mosaikartige Zusammensetzung aus Einzelbildern von einer niedrigauflösenden, also kostengünstigen, Kamera ein hochauflösendes Gesamtbild erzeugt werden kann und dass aus einem Gesamtbild mit mehreren Ebenen sowohl ein Überblick des Beobachtungsbereichs bei geringer Vergrößerung als auch dazugehörige Detailinformationen bei hoher Vergrößerung gewonnen werden können.

Ein Gesamtbild im Sinne der Erfindung ist ein Satz aus mehreren, unterschiedlichen Vergrößerungsstufen entsprechenden Ebenen von Bilddaten. Bei den Bilddaten einer Ebene kann es sich um jeweils ein aus den von einer Kamera aufgenommenen Einzelbildern der gleichen Vergrößerungsstufe zusammengesetztes Bild handeln. Die Bilddaten können aus den aufgenommenen Einzelbildern abgeleitet sein. Insbesondere können die Bilddaten auf ein verringertes Datenvolumen optimiert sein, beispielsweise durch Reduktion der Farbtiefe oder Aussparung wenig relevanter oder irrelevanter Bereiche wie dem Himmel. Weiterhin können die Bilddaten für eine bessere Auswertbarkeit optimiert sein, beispielsweise durch die Optimierung von Kontrast, Farbton und/oder Helligkeit zur besseren Erkennbarkeit von für die Hangüberwachung und/oder Bauüberwachung relevanten Strukturen oder zum Ausgleich unterschiedlicher Umgebungsbedingungen wie Beleuchtung und/oder Wetter zwischen zu unterschiedlichen Zeitpunkten aufgenommenen Bildern.

Die Einzelbilder einer Vergrößerungsstufe können unterschiedlich hoch aufgelöst sein, um das Datenvolumen und den Rechenaufwand für die Überwachung zu reduzieren. Denkbar ist, für besonders relevante Abschnitte des Beobachtungsbereichs eine höhere Auflösung zu wählen als für weniger relevante Abschnitte, um für ein gegebenes Datenvolumen die maximal mögliche Menge relevanter Informationen zu erhalten. Denkbar ist ferner, wenig relevante Abschnitte, auf denen beispielsweise der Himmel zu sehen ist, ganz auszusparen. Alternativ können den Himmel abbildende Abschnitte zumindest bei geringen Vergrößerungsstufen mit aufgenommen werden, um Rückschlüsse und ggf. Metadaten über die Wetterbedingungen und/oder Lichtverhältnisse zu gewinnen, die als Eingangsgrößen zur besseren Interpretation der den Beobachtungsbereich abbildenden Einzelbilder verwendet werden können. So können, eventuell zusätzlich zu einem Bilderkennungsalgorithmus, Bilder, die zu unterschiedlichen Zeitpunkten und Umweltbedingungen aufgenommen wurden, zur besseren Vergleichbarkeit untereinander geeicht bzw. kalibriert werden.

Die Kamera einer erfindungsgemäßen Vorrichtung kann so ausgelegt sein, dass bei der geringsten Vergrößerungsstufe der gesamte Beobachtungsbereich von einem einzigen Bild erfasst werden kann. Vorteilhaft daran ist, dass die Ebene der geringsten Vergrößerungsstufe des Gesamtbilds nicht aus mehreren Einzelbildern zusammengesetzt werden muss, sodass ein Verfahrensschritt entfällt und in dieser Ebene keine Artefakte durch eine möglicherweise ungenaue Zusammensetzung entstehen können. Anhand des einzigen Bildes geringster Vergrößerungsstufe können aufgrund des Ausschlusses von bei zusammengesetzten Bildern auftretenden Artefakten die zusammengesetzten Bilder höherer Vergrößerungsstufen effizienter ausgewertet und plausibilisiert werden. Denkbar ist auch, eine möglichst geringe Anzahl von Bildern geringster Vergrößerungsstufe pro Beobachtungsbereich zu verwenden.

Die Kamera einer erfindungsgemäßen Vorrichtung kann schwenkbar und/oder neigbar, insbesondere als Schwenk-Neige-Zoomkamera, ausgestaltet sein. Vorteilhaft an dieser Ausgestaltung ist, dass die Kamera auf bestimmte Einzelbilder und/oder unterschiedliche Beobachtungsbereiche ausgerichtet werden kann, ohne die Vorrichtung zu bewegen. Schwenk-Neige-Zoomkameras werden auch als Pan-Tilt-Zoom-Kameras oder PTZ-Kameras bezeichnet und zeichnen sich dadurch aus, dass ihre Ausrichtung und Vergrößerung automatisch eingestellt werden können. Vorteilhaft an Schwenk-Neige-Zoom-Kameras ist, dass sie als vollständig charakterisierte Komplettsysteme erhältlich sind, deren Ausrichtung und Vergrößerung mit hoher Genauigkeit und Reproduzierbarkeit einstellbar sind.

Die Kamera einer erfindungsgemäßen Vorrichtung kann ein optisches Element wie ein Objektiv bevorzugt mit einer Antibeschlageinrichtung umfassen. Die Antibeschlageinrichtung kann beispielsweise eine Beschichtung, insbesondere eine hydrophile Beschichtung, die die Bildung von Wassertröpfchen verhindert, und/oder eine Heizung, die die Kondensation von Wasserdampf verhindert, sein. Außerdem kann das optische Element einen Regenschutz, beispielsweise eine Überdachung, umfassen. Vorteilhaft an diesen Ausgestaltungen ist, dass das optische Element auch bei ungünstigen Bedingungen wie hoher Luftfeuchte oder Regen klar bleibt, sodass keine Artefakte auf den von der Kamera aufgenommenen Bildern erscheinen.

Die Recheneinheit einer erfindungsgemäßen Vorrichtung umfasst eine Datenschnittstelle, die dazu ausgelegt ist, Hilfsdaten, ausgewählt aus Wetterdaten, seismischen Daten und Verkehrsdaten und vorzugsweise auch anderen mit den Bilddaten in Beziehung stehenden Daten, synchron mit den Bilddaten von der Kamera aufzunehmen. Vorteilhaft an dieser Ausgestaltung ist, dass der Gegenstand der Beobachtung umfassend dokumentiert werden kann und dass durch die synchrone Speicherung bei einer späteren Analyse der zeitliche Zusammenhang unterschiedlicher Daten untersucht werden kann, um beispielsweise kausale Zusammenhänge aufzudecken. So spielt beispielsweise für die Entstehung von Erdrutschen die Feuchtigkeit des Erdreichs, die aus Wetterdaten wie Niederschlagsintensität und Temperatur abgeleitet werden kann, eine entscheidende Rolle.

Die Kommunikationseinheit einer erfindungsgemäßen Vorrichtung kann zur drahtlosen Kommunikation, insbesondere mittels bekannter Kommunikationsprotokolle, beispielsweise mittels WLAN (Wireless Local Area Network), UMTS (Universal Mobile Telecommunication System) und/oder LTE (Long-Term Evolution), ausgelegt ist. Der Vorteil drahtloser Kommunikation liegt darin, dass die, insbesondere in schwer zugänglichen Gebieten bei der Hangüberwachung, aufwendige und, insbesondere im Bereich von Baustellen, fehleranfällige Verlegung von Kommunikationsleitungen entfällt. Durch die Verwendung bekannter Kommunikationsprotokolle können vorteilhafterweise zum einen gut charakterisierte und kostengünstige Standardkomponenten zur Herstellung der Kommunikationseinheit verwendet werden, und zum anderen wird eine einfache Kommunikation mit nicht zur Erfindung gehörenden Geräten ermöglicht.

Eine erfindungsgemäße Vorrichtung kann eine autarke Energieversorgung umfassen, die insbesondere zur Nutzung von Windenergie und/oder Sonnenenergie ausgelegt sein kann. So kann beispielsweise an der Vorrichtung ein Photovoltaikmodul oder ein Windrad angebracht sein, das einen Akkumulator zur Energieversorgung der Vorrichtung auflädt. Der Vorteil einer autarken Energieversorgung liegt darin, dass die, insbesondere in schwer zugänglichen Gebieten bei der Hangüberwachung, aufwendige und, insbesondere im Bereich von Baustellen, fehleranfällige Verlegung von Versorgungsleitungen entfällt.

Eine erfindungsgemäße Vorrichtung kann zumindest einen Wettersensor, insbesondere einen Niederschlagssensor, Temperatursensor, Feuchtesensor, Helligkeitssensor und/oder Windsensor, umfassen. Wetterdaten spielen sowohl bei der Entstehung von Erdrutschen als auch für den Fortgang eines Bauvorhabens eine entscheidende Rolle. Ein Wettersensor erlaubt es der Vorrichtung, lokale Wetterdaten direkt am Beobachtungsort aufzunehmen, deren Vorteil in einer höheren Genauigkeit gegenüber von Wetterdiensten bereitgestellten Daten liegt.

Eine erfindungsgemäße Vorrichtung kann von einem Gehäuse umschlossen sein, das insbesondere staubdicht und/oder wetterfest sein kann und beispielsweise zumindest der Schutzart IP64 entspricht. Die Vorrichtung wird typischerweise im Außenbereich aufgestellt, und muss daher vor schädlichen Umwelteinflüssen, insbesondere auf ihre elektronischen Komponenten, geschützt werden. Ein Gehäuse schützt die Komponenten der erfindungsgemäßen Vorrichtung vor Witterung und/oder mechanischer Belastung.

Das Gehäuse einer erfindungsgemäßen Vorrichtung kann eine Aufstellvorrichtung, insbesondere ein Stativ wie eine vorzugsweise im Boden fest verankerte Stange, umfassen. Diese Ausgestaltung ist vorteilhaft, weil die Vorrichtung an einer wohldefinierten Position relativ zum Beobachtungsbereich sicher fixiert werden muss, um zu verschiedenen Zeitpunkten aufgenommene Bilder vergleichen zu können. Ein Stativ erlaubt zudem die Anordnung einer erfindungsgemäßen Vorrichtung in hinreichendem Bodenabstand. Dies ist vorteilhaft, weil bodennah angebrachte Vorrichtungen verstärkter Verstaubung, Verschmutzung oder Verdeckung des optischen Weges auf den Beobachtungsbereich durch Pflanzenwuchs oder Fahrzeuge oder aber Vandalismus und Manipulationsversuchen ausgesetzt sind.

Ein erfindungsgemäßes System zur markierungsfreien Hangüberwachung und/oder Bauüberwachung umfasst wenigstens eine erfindungsgemäße Vorrichtung zur markierungsfreien Hangüberwachung und/oder Bauüberwachung und eine Anzahl weiterer Kameras, die zur mosaikartigen Aufnahme von überlappenden Einzelbildern des gesamten Beobachtungsbereichs in mehreren Vergrößerungsstufen ausgelegt und kommunikativ mit der Vorrichtung verbunden sind. Vorteilhaft an der Einbindung weiterer Kameras ist, dass gleichzeitig mehrere Blickwinkel und/oder Beobachtungsbereiche aufgenommen werden können, um eine umfassendere Überwachung des Objekts der Beobachtung zu erreichen. Beispielsweise kann ein Gebäude von mehreren Seiten aufgenommen werden, damit auch Informationen über die Gebäuderückseite - bezogen auf die erfindungsgemäße Vorrichtung - gewonnen werden können. Im Verhältnis zu einem System aus mehreren erfindungsgemäßen Vorrichtungen lässt sich ein erfindungsgemäßes System kostengünstiger realisieren, da die zusätzlichen Kameras ohne eigene Recheneinheiten oder Datenspeicher auskommen können und nur eine einfachere Kommunikationseinheit als eine erfindungsgemäße Vorrichtung benötigen, da nur kurze Distanzen überwunden werden müssen.

Wenigstens eine Kamera des erfindungsgemäßen Systems kann so ausgelegt sein, dass bei der geringsten Vergrößerungsstufe der gesamte Beobachtungsbereich von einem einzigen Bild erfasst werden kann. Vorteilhaft daran ist, dass die Ebene der geringsten Vergrößerungsstufe des Gesamtbilds nicht aus mehreren Einzelbildern zusammengesetzt werden muss, sodass ein Verfahrensschritt entfällt und in dieser Ebene keine Artefakte durch eine möglicherweise ungenaue Zusammensetzung entstehen können. Anhand des einzigen Bildes geringster Vergrößerungsstufe können aufgrund des Ausschlusses von bei zusammengesetzten Bildern auftretenden Artefakten die zusammengesetzten Bilder höherer Vergrößerungsstufen effizienter ausgewertet und plausibilisiert werden. Denkbar ist auch, eine möglichst geringe Anzahl von Bildern geringster Vergrößerungsstufe pro Beobachtungsbereich zu verwenden.

Wenigstens eine Kamera des erfindungsgemäßen Systems kann schwenkbar und/oder neigbar, insbesondere eine Schwenk-Neige-Zoomkamera, sein. Vorteilhaft an dieser Ausgestaltung ist, dass die Kamera auf bestimmte Einzelbilder und/oder unterschiedliche Beobachtungsbereiche ausgerichtet werden kann. Vorteilhaft an Schwenk-Neige-Zoomkameras ist, dass sie als vollständig charakterisierte Komplettsysteme erhältlich sind, deren Ausrichtung und Vergrößerung mit hoher Genauigkeit und Reproduzierbarkeit einstellbar sind.

Wenigstens eine Kamera des erfindungsgemäßen Systems kann ein optisches Element wie ein Objektiv bevorzugt mit einer Antibeschlageinrichtung umfassen. Die Antibeschlageinrichtung kann beispielsweise eine Beschichtung insbesondere eine hydrophile Beschichtung, die die Bildung von Wassertröpfchen verhindert, und/oder eine Heizung, die die Kondensation von Wasserdampf verhindert sein. Außerdem kann das optische Element einen Regenschutz, beispielsweise eine Überdachung, umfassen. Vorteilhaft an diesen Ausgestaltungen ist, dass das optische Element auch bei ungünstigen Bedingungen wie hoher Luftfeuchte oder Regen klar bleibt, sodass keine Artefakte auf den von der Kamera aufgenommenen Bildern erscheinen.

Wenigstens eine Kamera des erfindungsgemäßen Systems kann eine autarke Energieversorgung umfassen, die insbesondere zur Nutzung von Windenergie und/oder Sonnenenergie ausgelegt sein kann. So kann beispielsweise an der Kamera ein Photovoltaikmodul oder ein Windrad angebracht sein, das einen Akkumulator zur Energieversorgung der Kamera auflädt. Der Vorteil einer autarken Energieversorgung liegt darin, dass die, insbesondere in schwer zugänglichen Gebieten bei der Hangüberwachung, aufwendige und, insbesondere im Bereich von Baustellen, fehleranfällige Verlegung von Versorgungsleitungen entfällt.

Wenigstens eine Kamera des erfindungsgemäßen Systems kann von einem Gehäuse umschlossen sein, das insbesondere staubdicht und/oder wetterfest sein kann und beispielsweise zumindest der Schutzart IP64 entspricht. Die Kamera wird typischerweise im Außenbereich aufgestellt, und muss daher vor schädlichen Umwelteinflüssen insbesondere auf ihre elektronischen Komponenten geschützt werden. Ein Gehäuse schützt die Kamera vor Witterung und/oder mechanischer Belastung.

Das Gehäuse wenigstens einer Kamera eines erfindungsgemäßen Systems kann eine Aufstellvorrichtung, insbesondere ein Stativ wie eine vorzugsweise im Boden fest verankerte Stange, umfassen. Diese Ausgestaltung ist vorteilhaft, weil die Kamera an einer wohldefinierten Position relativ zum Beobachtungsbereich sicher fixiert werden muss, um zu verschiedenen Zeitpunkten aufgenommene Bilder vergleichen zu können. Ein Stativ erlaubt zudem die Anordnung einer Kamera in hinreichendem Bodenabstand. Dies ist vorteilhaft, weil bodennah angebrachte optische Elemente verstärkter Verstaubung, Verschmutzung oder Verdeckung ihres optischen Weges auf den Beobachtungsbereich durch Pflanzenwuchs oder Fahrzeuge oder aber Vandalismus und Manipulationsversuchen ausgesetzt sind.

Ein erfindungsgemäßes Verfahren zur markierungsfreien Hangüberwachung und/oder Bauüberwachung umfasst zumindest die folgenden Schritte:
- Aufnehmen von mosaikartigen, überlappenden Einzelbildern des gesamten Beobachtungsbereichs in mehreren Vergrößerungsstufen in regelmäßigen Zeitabständen, durch zumindest eine Kamera;
- Zusammensetzen der Einzelbilder eines Zeitpunktes zu jeweils einem Gesamtbild mit mehreren Ebenen, die den Vergrößerungsstufen entsprechen durch eine Recheneinheit, wobei die Einzelbilder einer Ebene an den Bildern der Ebene der jeweils nächstgeringeren Vergrößerungsstufe ausgerichtet werden, und
- Speichern der Gesamtbilder durch die Recheneinheit in einem Datenspeicher.

Vorteilhaft daran ist, dass durch die mosaikartige Zusammensetzung aus Einzelbildern von einer niedrigauflösenden, also kostengünstigen, Kamera ein hochauflösendes Gesamtbild erzeugt werden kann und dass aus einem Gesamtbild mit mehreren Ebenen sowohl ein Überblick des Beobachtungsbereichs bei geringer Vergrößerung als auch dazugehörige Detailinformationen bei hoher Vergrößerung gewonnen werden können. Weiterhin ist es vorteilhaft, die Einzelbilder einer Ebene nicht aneinander durch sogenanntes Stitching, sondern an den Bildern der Ebene der nächstgeringeren Vergrößerungsstufe auszurichten, weil die Einzelbilder einer Ebene nie perfekt aneinanderpassende Bildausschnitte zeigen, sondern leicht gegeneinander versetzt oder verdreht sind. Dadurch entstehen beim Stitching, insbesondere im Fall einer großen Anzahl von Einzelbildern, Verzerrungen, die eine quantitative Auswertung des Gesamtbilds erschweren. Bei der erfindungsgemäßen Ausrichtung entstehen keine Verzerrungen, weil jedes einzelne Einzelbild an dem Bild der Ebene der nächst geringeren Vergrößerungsstufe perfekt positioniert und ausgerichtet werden kann, wobei dank des Überlappens der Einzelbilder keine Lücken entstehen.

Das Aufnehmen in einem erfindungsgemäßen Verfahren kann durch zumindest zwei Kameras aus unterschiedlichen Blickwinkeln erfolgen, um vorteilhaft eine umfassendere Überwachung des Objekts der Beobachtung zu erreichen. Beispielsweise kann ein Gebäude von mehreren Seiten aufgenommen werden, damit auch Informationen über die Gebäuderückseite - bezogen auf eine Kamera - gewonnen werden können.

Werden in einem erfindungsgemäßen Verfahren zumindest zwei Kameras mit unterschiedlichen Blickwinkeln eingesetzt, kann die Recheneinheit aus den Bildern der Kameras eine dreidimensionale Darstellung des Beobachtungsbereichs berechnen, aus der auf besonders einfache Weise umfassende Informationen über das Objekt der Beobachtung abgelesen werden können. Weiterhin kann aus einer dreidimensionalen Darstellung das Hangvolumen und/oder Bauvolumen im Beobachtungsbereich berechnet und beispielsweise an ein Enterprise-Resource-Planning-System (ERP-System) übermittelt werden. Wenn der überwachte Hang beispielsweise Teil eines Tagebau-Bergwerks ist, kann aus der zeitlichen Änderung des Hangvolumens auf die Förderrate des Bergwerks geschlossen und diese direkt in das ERP-System des Bergbauunternehmens zur Steuerung weiterer Unternehmensprozesse übertragen werden. Auch im Fall eines Bauvorhabens können aus dem Volumen des Baukörpers wichtige Informationen für die Ressourcenplanung des Bauunternehmens, zum Beispiel über den Baumaterialverbrauch, abgeleitet werden.

Werden in einem erfindungsgemäßen Verfahren zumindest zwei Kameras mit unterschiedlichen Blickwinkeln eingesetzt, kann die Recheneinheit mit Hilfe der Bilder von zumindest einer am Rand des Beobachtungsbereichs angebrachten Markierung die Relativposition der Kameras zueinander und zum Beobachtungsbereich berechnen. Vorteilhaft daran ist, dass bei bekannten Relativpositionen die Bilder mehrerer Kameras, zum Beispiel zur Berechnung einer dreidimensionalen Darstellung, miteinander kombiniert werden können, ohne dass die Positionen der Kameras zuvor genau vermessen werden müssen.

Beim Zusammensetzen der Einzelbilder in einem erfindungsgemäßen Verfahren können die Einzelbilder durch manuell gesetzte Ankerpunkte und/oder automatisch durch Kontrastdetektion, bevorzugt Feature Detection, ausgerichtet werden. Das manuelle Setzen von Ankerpunkten bietet die Vorteile hoher Zuverlässigkeit und einfacher technischer Umsetzung. Die automatische Kontrastdetektion ist technisch aufwendiger, bietet aber dafür die Vorteile einer höheren Geschwindigkeit und der Möglichkeit, rund um die Uhr ohne menschlichen Eingriff zu arbeiten.

In einem erfindungsgemäßen Verfahren kann das Speichern der Gesamtbilder in Form von Videodateien erfolgen. Dadurch werden Bildbereiche, die sich zwischen aufeinanderfolgenden Bildern nicht ändern nur jeweils einmal gespeichert, was zu einer erheblichen Reduktion der Datenmenge führt. Wenn weniger Daten zu speichern und zu übertragen sind, ergibt sich der Vorteil, dass Datenspeicher und Kommunikationseinheit weniger leistungsfähig und somit kostengünstiger und energieeffizienter ausgelegt sein können. Durch den geringeren Energieverbrauch kann wiederum die Energieversorgung weniger leistungsfähig und kostengünstiger ausgelegt sein.

In einem erfindungsgemäßen Verfahren kann das Speichern der Gesamtbilder synchron mit Hilfsdaten, beispielsweise Wetterdaten, seismischen Daten, Daten zum Bauverlauf, Verkehrsdaten und/oder anderen mit den Bilddaten in Beziehung stehenden Daten erfolgen, die von wenigstens einem lokalen Sensor und/oder aus wenigstens einer Datenbank abgerufen werden. Vorteilhaft an dieser Ausführungsform ist, dass der Gegenstand der Beobachtung umfassend dokumentiert werden kann und dass durch die synchrone Speicherung bei einer späteren Analyse der zeitliche Zusammenhang unterschiedlicher Daten untersucht werden kann, um beispielsweise kausale Zusammenhänge aufzudecken. So spielt beispielsweise für die Entstehung von Erdrutschen die Feuchtigkeit des Erdreichs, die aus Wetterdaten wie Niederschlagsintensität und Temperatur abgeleitet werden kann, eine entscheidende Rolle.

Das erfindungsgemäße Verfahren kann einen Vergleich zu unterschiedlichen Zeitpunkten aufgenommener Gesamtbilder einschließen. Vorteilhaft daran ist, dass durch den direkten Vergleich korrespondierender Bilder auch geringfügige Bewegungen eines Hangs in der Anfangsphase eines Erdrutsches erkannt werden können.

Ein erfindungsgemäßer Vergleich kann zunächst auf der Ebene geringster Vergrößerung erfolgen und in Ebenen höherer Vergrößerung nur auf Bereiche erstreckt werden, die bereits bei geringerer Vergrößerung Unterschiede zeigen. Auf diese Weise kann mit geringem Aufwand eine große Datenmenge analysiert werden.

Ein erfindungsgemäßer Vergleich kann durch automatische Bewegungserkennung und/oder Bewegungsquantifizierung erfolgen, wobei insbesondere Methoden der Computer Vision eingesetzt werden können, und/oder die Auswertung in Echtzeit erfolgen kann. Durch automatische Bewegungserkennung und/oder Bewegungsquantifizierung können vorteilhaft große Datenmengen mit hoher Geschwindigkeit und der Möglichkeit, rund um die Uhr ohne menschlichen Eingriff zu arbeiten, analysiert werden. Methoden der Computer Vision wie beispielsweise Optical Flow Detection und/oder Motion Detection haben gegenüber Methoden der Machine Vision bei der Analyse komplexer Bilddaten den Vorteil, dass kein Soll-Ist-Vergleich anhand vordefinierter Muster erfolgt, sondern eine allgemeinere Mustererkennung und/oder Bewegungserkennung anhand abstrakter Kriterien. Um auf Vorfälle im Beobachtungsbereich rechtzeitig reagieren zu können, ist es besonders vorteilhaft, wenn die Auswertung in Echtzeit erfolgt, das heißt in einem kürzeren Zeitintervall als typische Vorgänge im Beobachtungsbereich.

Werden in einem erfindungsgemäßen Verfahren Gesamtbilder verglichen, kann bei Unterschieden zwischen den Gesamtbildern eine Warnmeldung ausgegeben werden. Dadurch kann das Verfahren unbeaufsichtigt ablaufen, solange nichts passiert, und nur bei Bedarf beispielsweise eine Kontrolle durch einen menschlichen Beobachter auslösen. Im Falle einer Hangüberwachung könnte zum Beispiel bei Auftreten von Bewegungen im Hang durch eine Warnmeldung ein geologischer Gutachter zur Überprüfung der Situation hinzugerufen oder der Bereich der Bewegung evakuiert werden.

Die Ausgabe einer erfindungsgemäßen Warnmeldung kann zusammen mit den von Unterschieden betroffenen Gesamtbildern und/oder zugehörigen Hilfsdaten erfolgen, wobei insbesondere die von Unterschieden betroffenen Bildbereiche markiert werden können. Daraus ergibt sich der Vorteil, dass sich der Empfänger der Warnmeldung, beispielsweise ein geologischer Gutachter, sofort ein umfassendes Bild von der Lage vor Ort machen kann.

Die Ausgabe einer erfindungsgemäßen Warnmeldung kann in unterschiedlichen Warnstufen abhängig von der Menge der gefundenen Unterschiede erfolgen. An einer mehrstufigen Warnmeldung ist vorteilhaft, dass die Warnmeldung je nach Warnstufe automatisch an unterschiedliche Personenkreise geschickt werden und/oder unterschiedliche Reaktionen auslösen kann. So könnte beispielsweise eine kleine Hangbewegung lediglich die Fern-Überprüfung der zugehörigen Bilder, eine mittlere Hangbewegung eine Überprüfung vor Ort und eine große Hangbewegung die sofortige Evakuierung des Hangumfelds auslösen.

In einem erfindungsgemäßen Verfahren können Bilddaten, daraus abgeleitete Metadaten, beispielsweise erkannte Bewegungsmuster, und/oder Hilfsdaten zusammen mit zugehörigen geologischen Beurteilungen in einer Datenbank gespeichert werden. Die Datenbank kann dann zur automatischen Beurteilung der einer Warnmeldung zugrundeliegenden Daten genutzt werden. Für die Beurteilung können insbesondere lernfähige Algorithmen eingesetzt werden, um ausgehend von den aktuellen Daten eines Standorts mit den Daten und geologischen Beurteilungen von anderen Zeitpunkten und/oder Standorten eine zu den aktuellen Daten passende Beurteilung zu erstellen. Ein so ausgeführtes Verfahren hat den Vorteil, dass eine erste Beurteilung schneller erfolgen kann als mit einem menschlichen Gutachter. In der Folge können gegebenenfalls auch Maßnahmen gegen einen bevorstehenden Erdrutsch schneller eingeleitet werden.

In einem erfindungsgemäßen Verfahren können die gespeicherten und/oder aktuellen Bilddaten, daraus abgeleitete Metadaten wie Bewegungsmuster und/oder Hilfsdaten, beispielsweise drahtlos, insbesondere mittels UMTS und/oder LTE, an einen mit dem Internet verbundenen Server übermittelt werden. Diese Ausführungsform bietet den Vorteil, dass berechtigte Personen jederzeit, weltweit zur Echtzeit-Überwachung und/oder zur retrospektiven Analyse auf die Daten zugreifen können.

In einem erfindungsgemäßen Verfahren kann zumindest eine Kamera an wenigstens einer den Beobachtungsbereich überragenden Konstruktion so angebracht sein, dass die von der Kamera aufgenommenen Bilder im Wesentlichen Aufsichten des Beobachtungsbereichs zeigen. Vorteilhaft an der Aufnahme von Aufsichten ist, dass auch Bereiche abgebildet werden können, die in Seitansichten verdeckt sind. Im Wesentlichen meint hierbei, dass die für den Beobachtungszweck relevanten Strukturen nicht so von anderen Strukturen verdeckt werden, dass das Beobachtungsziel nicht oder nicht ausreichend abgebildet werden kann. Beispielsweise könnte eine Wand eines Rohbaus aus Perspektive einer Kamera einen Sichtschatten auf einen Teil eines dahinter liegenden Raumes werfen. Je steiler der Aufsichtswinkel der Kamera, desto kleiner wird dieser Sichtschatten. Insbesondere kann daher der Beobachtungsbereich aus verschiedenen Winkelperspektiven abgebildet werden. Die Aufnahme aus verschiedenen Perspektiven kann realisiert werden, indem eine Mehrzahl von Kameras aus jeweils verschiedenen, beispielsweise stationären, Perspektiven, und/oder eine Anzahl von Kameras aus jeweils einer, insbesondere bezüglich des Relativabstandes und/oder zumindest eines Raumwinkels, dynamischen Position auf den Beobachtungsbereich gerichtet werden. Insbesondere können während des Baus eines Gebäudes regelmäßig aufgenommene Aufsichten wie bei einer Tomographie, insbesondere vermittels fachbekannter computergestützter Verfahren, schichtweise zusammengesetzt werden, um eine dreidimensionale Darstellung des Gebäudes mitsamt seinem Inneren zu erhalten. Außerdem bewirkt die Anbringung von erfindungsgemäßen Vorrichtungen und/oder Kameras an wenigstens einer den Beobachtungsbereich überragenden Konstruktion einen Schutz vor Vandalismus, Diebstahl oder Manipulation, indem beispielsweise die Kamera für Manipulationsversuche schwerer erreichbar ist als bei einer Anbringung in Bodennähe. Eine den Beobachtungsbereich überragende Konstruktion kann beispielsweise ein Kran, ein insbesondere mit einem Seil am Boden verankerter Ballon oder ein Gebäude sein. Die Anbringung an einem Kran, insbesondere an der Katze eines Krans, bewirkt den Vorteil, dass sich die Kamera genau über dem Bereich der aktuellen Arbeiten positionieren lässt und insbesondere die Kameraperspektive automatisch auf den Beobachtungsbereich, in dem ein zu protokollierender oder zu überwachender Baufortschritt erfolgt, gerichtet ist. Im Tagebau kann eine Kamera beispielsweise an einer Tagebaumaschine angebracht sein, um den einen Eingriff in einen Hang umgebenden Beobachtungsbereich zu überwachen, wo aufgrund des Eingriffes in den Hang die Erdrutschgefahr erhöht ist. Dies hat den zusätzlichen Vorteil, dass der Hang während der Tagebauarbeiten vorzugsweise in Echtzeit überwacht werden kann und aus Sicherheitsgründen ein Bediener der Tagebaumaschine frühzeitig vor einem sich abzeichnenden Erdrutsch über eine Warneinrichtung gewarnt werden kann, so dass er die Tagebauarbeiten einstellen und sich in Sicherheit bringen kann.

Ein besonderer Vorteil der Erfindung ist, dass durch das optische Scannen eines Hangs oder Bauwerks in mehreren Vergrößerungsstufen und die Zusammensetzung der Einzelbilder zu einem Gesamtbild eine vollständige und systematische Überwachung mit der Möglichkeit zur Langzeitspeicherung und Echtzeitauswertung der Bilddaten und dazugehöriger Hilfsdaten mit kostengünstigen Mitteln ermöglicht wird.

Nachfolgend wird die Erfindung anhand von Ausführungsbeispielen beschrieben, die mit Hilfe der Figuren näher erläutert werden.

Es zeigen:
- Fig. 1: eine schematische, beispielhafte Ausgestaltung einer erfindungsgemäßen Vorrichtung zur Hangüberwachung und/oder Bauüberwachung;
- Fig. 2: eine schematische, beispielhafte Ausgestaltung eines erfindungsgemäßen Systems zur Hangüberwachung und/oder Bauüberwachung;
- Fig. 3: eine schematische, beispielhafte Ausführungsform eines erfindungsgemäßen Verfahrens zur Hangüberwachung und/oder Bauüberwachung;
- Fig. 4: beispielhafte Besonderheiten eines erfindungsgemäßen Verfahrens mit mehr als einer Kamera in einer schematischen Ausführungsform;
- Fig. 5: eine beispielhafte Illustration des Aufnehmens von mosaikartigen, überlappenden Einzelbildern in einem erfindungsgemäßen Verfahren;
- Fig. 6: eine vereinfachte, beispielhafte Illustration des Aufnehmens von mosaikartigen, überlappenden Einzelbildern in einem erfindungsgemäßen Verfahren und
- Fig. 7: eine beispielhafte Illustration zur Anbringung einer Kamera an einer den Beobachtungsbereich überragenden Konstruktion in einem erfindungsgemäßen Verfahren.

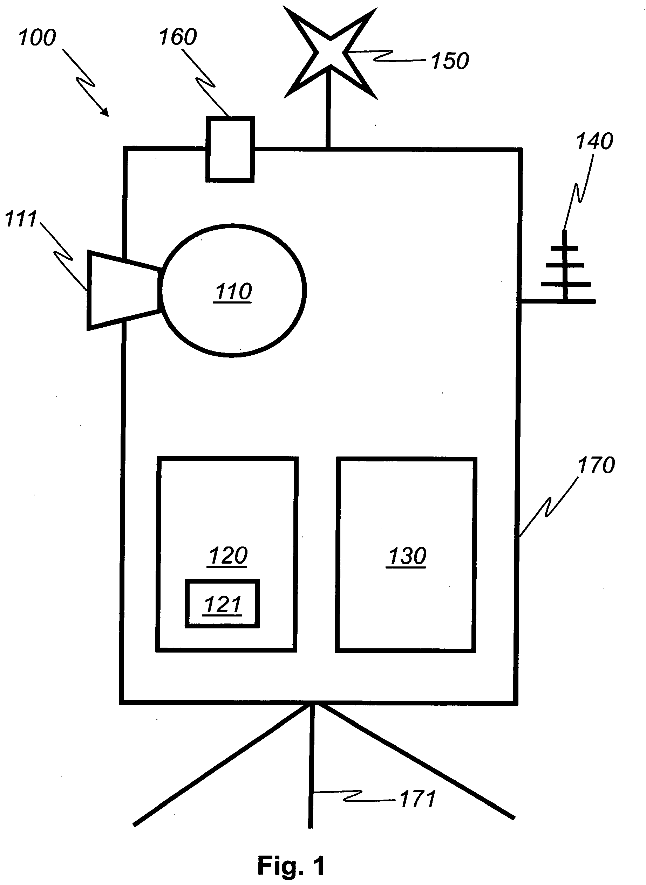

Figur 1 zeigt eine schematische, beispielhafte Ausgestaltung einer erfindungsgemäßen Vorrichtung 100 zur Hangüberwachung und/oder Bauüberwachung. Die Vorrichtung 100 umfasst eine Schwenk-Neige-Zoom-Kamera 110 mit einem Objektiv als optisches Element 111, das mit einer hydrophilen Antibeschlagbeschichtung versehen ist, einen Mikroprozessor mit Datenschnittstelle 121 zur Aufnahme von Wetterdaten als Recheneinheit 120, einen Datenspeicher 130 in Form eines Solid State Drives und eine Kommunikationseinheit 140 mit Antenne in Form eines LTE-Moduls. Weiterhin umfasst die Vorrichtung 100 ein Windrad als autarke Energieversorgung 150 und einen Wettersensor 160 in Form eines Regensensors. Die Vorrichtung 100 wird von einem bevorzugt staub- und wasserdichten Gehäuse 170 umschlossen, dass ein Stativ als Aufstellvorrichtung 171 umfasst. Die Verbindungen zwischen den einzelnen Komponenten sind der Klarheit halber nicht dargestellt.

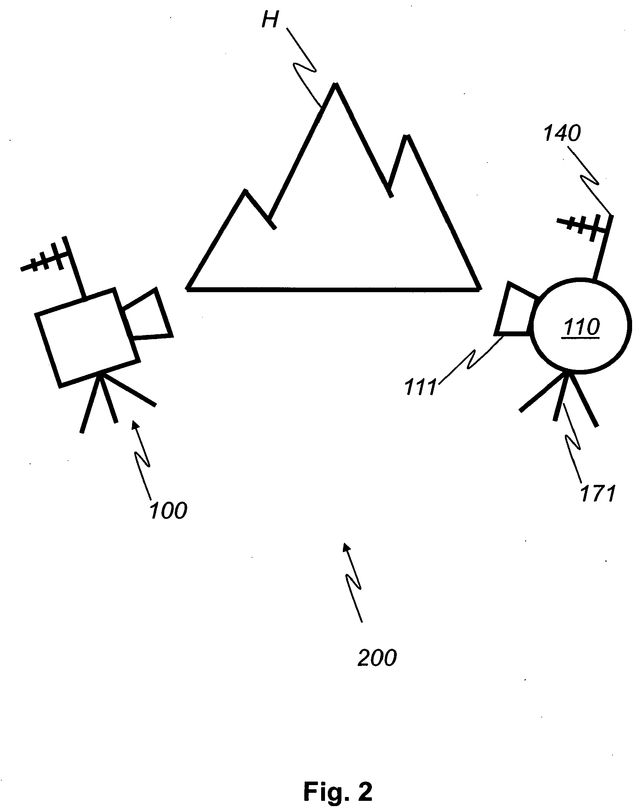

Figur 2 zeigt eine schematische, beispielhafte Ausgestaltung eines erfindungsgemäßen Systems 200 zur Hangüberwachung und/oder Bauüberwachung aus einer erfindungsgemäßen Vorrichtung 100 und einer weiteren Schwenk-Neige-Zoom-Kamera 110, die aus verschiedenen Perspektiven bzw. von verschiedenen Standorten und/oder in verschiedenen Ausrichtungen auf einen Hang H ausgerichtet und drahtlos kommunikativ miteinander verbunden sind. Die Kamera 110 umfasst eine Objektiv als optisches Element 111, das mit einer hydrophilen Antibeschlagbeschichtung versehen ist, eine Kommunikationseinheit 140, um aufgenommene Bilder an die Vorrichtung 100 zu übermitteln, und ein Stativ als Aufstellvorrichtung 171 zur sicheren Fixierung der Kamera 110.

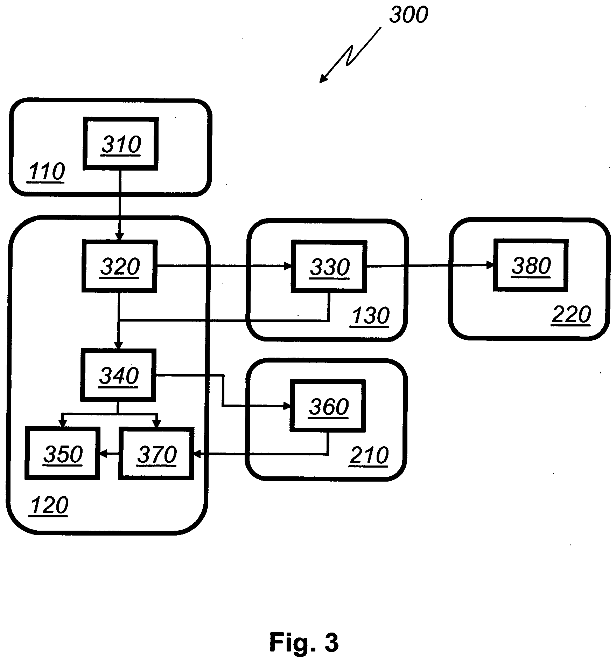

Figur 3 zeigt eine schematische, beispielhafte Ausführungsform eines erfindungsgemäßen Verfahrens 300 zur Hangüberwachung und/oder Bauüberwachung. Zuerst führt eine Kamera 110 die Aufnahme 310 überlappender, mosaikartiger Einzelbilder eines erdrutschgefährdeten Hangs mit mehreren Vergrößerungsstufen aus. Dann übernimmt eine Recheneinheit 120 die Zusammensetzung 320 der Einzelbilder zu einem Gesamtbild mit mehreren, den Vergrößerungsstufen entsprechenden Ebenen, wobei die Einzelbilder einer Ebene mit Hilfe von Feature Detection automatisch an den Bildern der Ebene der jeweils nächstgeringeren Vergrößerungsstufe ausgerichtet werden. Danach erfolgt die Speicherung 330 der Gesamtbilder in Form von Videodateien in einem Datenspeicher 130. Parallel zur Speicherung 330 erfolgt eine Übermittlung 380 der Bilddaten an einen mit dem Internet verbundenen Server, damit berechtigte Personen weltweit auf die Daten zugreifen können. Im nächsten Schritt erfolgt ein Vergleich 340 des aktuellen Gesamtbilds mit dem zuletzt gespeicherten Gesamtbild durch die Recheneinheit 120. Dabei werden Unterschiede durch Methoden der Computer Vision in Echtzeit erkannt und quantifiziert. Es werden zunächst nur die Ebenen geringster Vergrößerung verglichen, um Rechenleistung zu sparen. Nur wenn in diesen Ebenen Unterschiede auftreten, werden die betroffenen Bereiche bei höherer Vergrößerung weiter untersucht. Wird ein bestimmtes Maß an Unterschiedlichkeit überschritten, löst die Recheneinheit die Ausgabe 350 einer Warnmeldung aus, die eine geologische Begutachtung des beobachteten Hangs nach sich zieht. Die Recheneinheit 120 führt danach die Übermittlung 360 der Ergebnisse der Begutachtung zusammen mit den zu Grunde liegenden Bilddaten und Bewegungsmustern in eine Datenbank 210 aus. Wenn in weiteren Vergleichsvorgängen 340 Unterschiede festgestellt werden, führt die Recheneinheit 120 mit den aktuellen Bilddaten und Bewegungsmustern und den in der Datenbank 210 hinterlegten Bilddaten, Bewegungsmustern und geologischen Beurteilungen eine automatische geologische Beurteilung 370 durch und gibt die Beurteilung 370 zusammen mit der Warnmeldung zur Ausgabe 350.

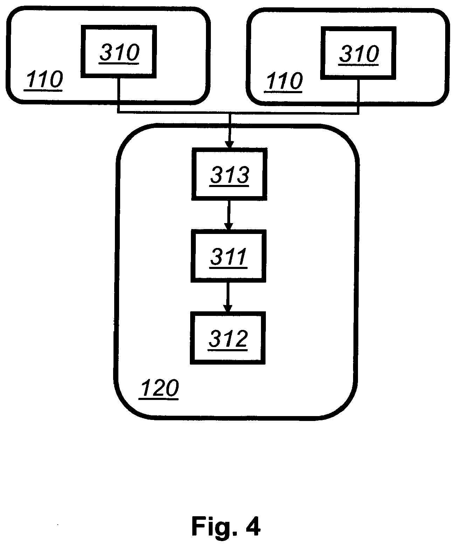

Figur 4 zeigt beispielhafte Besonderheiten eines erfindungsgemäßen Verfahrens 300 mit mehr als einer Kamera 110 in einer schematischen Ausführungsform. Nach der Aufnahme 310 von Bildern des Beobachtungsbereichs mit am Rand angebrachten Markierungen, beispielsweise eines Hangs eins Tagebaubergwerks, durch mindestens zwei Kameras 110, wird von einer Recheneinheit 120 anhand der Bilder der Markierungen die Ermittlung 313 der

Relativposition der Kameras zueinander und zum Hang durchgeführt. Die Positionsdaten werden dann zusammen mit den Bilddaten zur Berechnung 311 einer dreidimensionalen Darstellung des Hangs durch die Recheneinheit 120 verwendet. Dabei wird weiterhin das Hangvolumen berechnet und seine Übermittlung 312 an ein Enterprise-Resource-Planning-System durchgeführt, sodass beispielsweise die Bergbaufirma über das im Hang verbleibende Abbauvolumen informiert wird. Weiter Verfahrensschritte lassen sich wie in Figur 3 dargestellt anschließen.

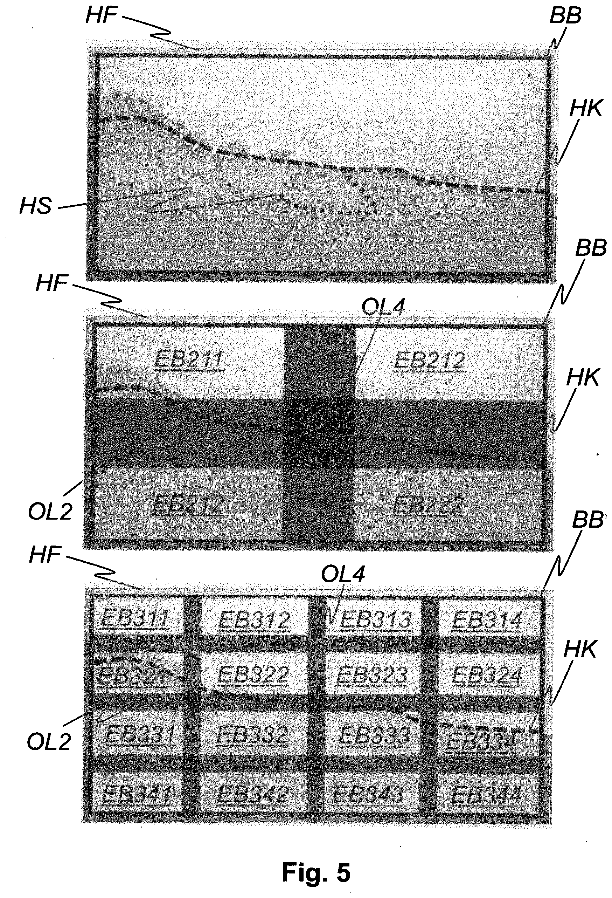

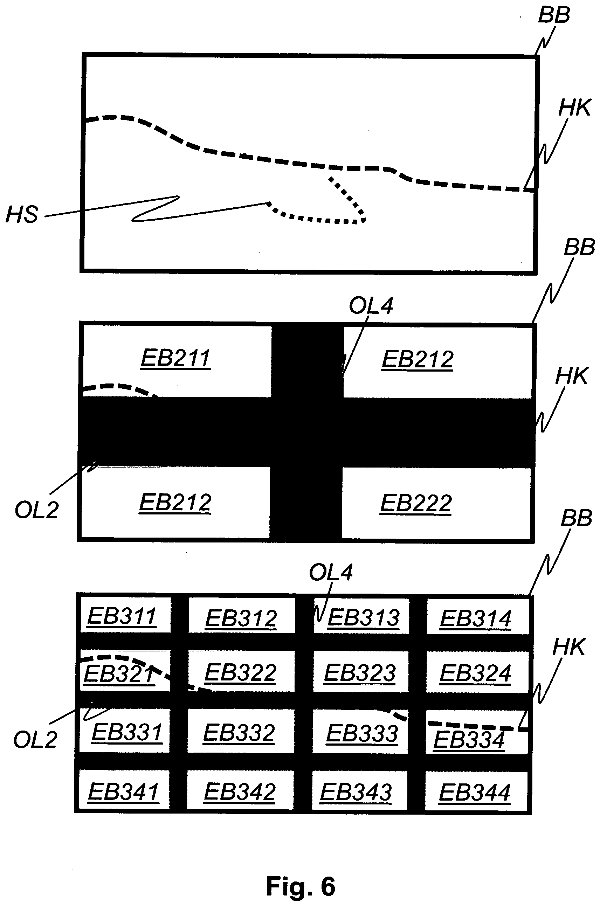

Figur 5 zeigt eine beispielhafte Illustration des Aufnehmens 310 von mosaikartigen, überlappenden Einzelbildern in einem erfindungsgemäßen Verfahren 300 anhand eines Fotos HF des überwachten Hangs, auf dem die Kontur HK des Hangs und eine Struktur HS des Hangs sichtbar sind. Bei geringster Vergrößerungsstufe wird nur ein Einzelbild aufgenommen, das sich mit dem Beobachtungsbereich BB deckt, in dem ein Abschnitt der Hangkontur HK und die Hangstruktur HS liegen. Das Bild bildet die Ebene geringster Vergrößerungsstufe des Gesamtbilds. Bei zweitgeringster Vergrößerungsstufe werden vier Einzelbilder E211, E212, E221, E222 aufgenommen, von denen jeweils zwei in den Überlappbereichen OL2 und alle vier im Überlappbereich OL4 überlappen. Zusammen bilden die vier Einzelbilder die Ebene zweitgeringster Vergrößerungsstufe des Gesamtbildes. Bei drittgeringster Vergrößerungsstufe werden sechzehn Einzelbilder EB311 - EB344 aufgenommen, die jeweils paarweise in den Überlappbereichen OL2 und zu viert im Überlappbereich OL4 überlappen. Zusammen bilden die sechzehn Einzelbilder die Ebene drittgeringster Vergrößerungsstufe des Gesamtbildes. Für mögliche weitere Vergrößerungsstufen wird jeweils die Anzahl der Einzelbilder gegenüber der vorherigen Vergrößerungsstufe vervierfacht. Der Inhalt von Einzelbildern einer Ebene kann anhand der entsprechenden Bilder anderer Ebenen auf Plausibilität überprüft werden. Im Beispiel von Figur 6 könnte beispielsweise das Einzelbild E344 anhand von Einzelbild E222 überprüft werden. Bei fehlender Plausibilität kann das nicht plausible Einzelbild nachbearbeitet, neu aufgenommen und/oder in der Auswertung untergewichtet werden. Der Vorteil dieser Plausibilitätsprüfung ist, dass Artefakte, die die Auswertung stören könnten, frühzeitig erkannt und eliminiert werden können.

Figur 6 unterscheidet sich von Figur 5 nur dadurch, dass das unterlegte Foto HF des Hangs der Klarheit halber entfernt wurde.

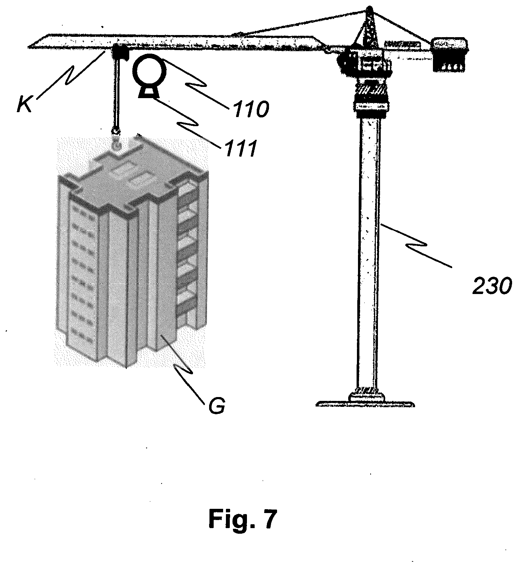

Figur 7 zeigt eine beispielhafte Illustration zur Anbringung einer Kamera 110 an einer den Beobachtungsbereich BB überragenden Konstruktion 230 in einem erfindungsgemäßen Verfahren 300. Die den Beobachtungsbereich BB überragende Konstruktion 230 ist im Beispiel ein Kran, an dem zumindest eine Kamera 110 so angebracht ist, dass ihr als Objektiv ausgebildetes optisches Element 111 von oben auf ein im Bau befindliches Gebäude G gerichtet ist. Vorteilhafterweise kann zumindest eine Kamera 110 an einem beweglichen Teil wie einer Katze K des Krans angebracht werden, um gezielt den Bereich, in dem ein Baufortschritt stattfindet, zu überwachen, idealerweise aus verschiedenen Perspektiven, um im Ensemble aller aufgenommenen Bilder Sichtfeldabschattungen auszugleichen. Aus während des Baus eines Gebäudes G oder auch während des Abbaus eines Hangs H im Tagebau regelmäßig aufgenommenen Aufsichten kann so wie bei einer Tomographie eine dreidimensionale Darstellung des Gebäudes G beziehungsweise des Hangs H mitsamt seinem Inneren erstellt werden.

### Bezugszeichenliste

- 100: Vorrichtung
- 110: Kamera
- 111: optisches Element
- 120: Recheneinheit
- 121: Datenschnittstelle
- 130: Datenspeicher
- 140: Kommunikationseinheit
- 150: autarke Energieversorgung
- 160: Wettersensor
- 170: Gehäuse
- 171: Aufstellvorrichtung
- 200: System
- 210: Datenbank
- 220: Server
- 230: den Beobachtungsbereich BB überragende Konstruktion
- 300: Verfahren
- 310: Aufnehmen
- 311: Berechnen
- 312: Übermitteln des ermittelten Volumens an ein ERP-System
- 313: Ermitteln
- 320: Zusammensetzen
- 330: Speichern
- 340: Vergleich
- 350: Ausgabe
- 360: Übermitteln der Daten an eine Datenbank 210
- 370: automatische Beurteilung einer Warnmeldung zugrundeliegender Daten
- 380: Übermitteln der Daten an einen Server 220

- H: Hang
- HF: Hangfoto
- HS: Hangstruktur
- BB: Beobachtungsbereich
- EBXYZ: Einzelbild der Ebene X.-geringster Vergrößerungsstufe an Position YZ, wobei X, Y, Z = 1, 2, 3, 4, ...
- OL2: Überlappbereich zweier benachbarter Einzelbilder
- OL4: Überlappbereich vierer benachbarter Einzelbilder
- G: Gebäude
- K: Katze

## Patentansprüche

1. Vorrichtung (100) zur markierungsfreien Hangüberwachung und/oder Bauüberwachung mit zumindest einer Kamera (110), einer Recheneinheit (120), einem Datenspeicher (130) und einer Kommunikationseinheit (140), die untereinander kommunikativ verbunden sind,
wobei
• die Kamera (110) zur mosaikartigen Aufnahme von überlappenden Einzelbildern des gesamten Beobachtungsbereichs in mehreren Vergrößerungsstufen ausgelegt ist und
• die Recheneinheit (120) dazu ausgelegt ist, aus den Einzelbildern verschiedener Vergrößerungsstufen ein Gesamtbild mit den Vergrößerungsstufen entsprechenden Ebenen zusammenzusetzen und
die Recheneinheit (120) eine Datenschnittstelle (121) umfasst, die dazu ausgelegt ist, Hilfsdaten, ausgewählt aus Wetterdaten, seismischen Daten und Verkehrsdaten, synchron mit den Bilddaten von der Kamera (110) aufzunehmen.

2. Vorrichtung (100) gemäß Anspruch 1,
**dadurch gekennzeichnet, dass** die Kamera (110)
• so ausgelegt ist, dass bei der geringsten Vergrößerungsstufe der gesamte Beobachtungsbereich von einem einzigen Bild erfasst werden kann;
• schwenkbar und/oder neigbar, bevorzugt eine Schwenk-Neige-Zoomkamera, ist und/oder
• ein optisches Element (111), bevorzugt mit einer Antibeschlageinrichtung, besonders bevorzugt einer Beschichtung und/oder einer Heizung, und/oder einem Regenschutz umfasst.

3. Vorrichtung (100) gemäß einem der vorherigen Ansprüche,
**dadurch gekennzeichnet, dass**
die Kommunikationseinheit (140) zur drahtlosen Kommunikation, bevorzugt mittels bekannter Kommunikationsprotokolle, meist bevorzugt mittels WLAN, UMTS und/oder LTE, ausgelegt ist.

4. Vorrichtung (100) gemäß einem der vorherigen Ansprüche,
**dadurch gekennzeichnet, dass**
die Vorrichtung (100) eine autarke Energieversorgung (150) umfasst, die bevorzugt zur Nutzung von Windenergie und/oder Sonnenenergie ausgelegt ist.

5. Vorrichtung (100) gemäß einem der vorherigen Ansprüche,
**dadurch gekennzeichnet, dass**
die Vorrichtung (100) zumindest einen Wettersensor (160), ausgewählt aus einem Niederschlagssensor, Temperatursensor, Feuchtesensor und Windsensor, umfasst.

6. Vorrichtung (100) gemäß einem der vorherigen Ansprüche,
**dadurch gekennzeichnet, dass**
die Vorrichtung (100) von einem Gehäuse (170) umschlossen ist, das bevorzugt staubdicht und/oder wetterfest ist und besonders bevorzugt zumindest der Schutzart IP64 entspricht, wobei das Gehäuse bevorzugt eine Aufstellvorrichtung, besonders bevorzugt ein Stativ, umfasst.

7. System (200) zur markierungsfreien Hangüberwachung und/oder Bauüberwachung mit wenigstens einer Vorrichtung (100) gemäß einem der Ansprüche 1 - 6,
**dadurch gekennzeichnet, dass**
eine Anzahl weiterer Kameras (110), die zur mosaikartigen Aufnahme von überlappenden Einzelbildern des gesamten Beobachtungsbereichs in mehreren Vergrößerungsstufen ausgelegt sind, kommunikativ mit der Vorrichtung (100) verbunden ist.

8. System (200) gemäß Anspruch 7,
**dadurch gekennzeichnet, dass** die wenigstens eine der weiteren Kameras (110)
• so ausgelegt ist, dass bei der geringsten Vergrößerungsstufe der gesamte Beobachtungsbereich von einem einzigen Bild erfasst werden kann;
• schwenkbar und/oder neigbar, bevorzugt eine Schwenk-Neige-Zoomkamera, ist;
• ein optisches Element (111), bevorzugt mit einer Antibeschlageinrichtung, besonders bevorzugt einer Beschichtung und/oder einer Heizung, und/oder einem Regenschutz umfasst;
• eine autarke Energieversorgung (150) umfasst, die bevorzugt zur Nutzung von Windenergie und/oder Sonnenenergie ausgelegt ist und/oder
• von einem Gehäuse (170) umschlossen ist, das bevorzugt staubdicht und/oder wetterfest ist und besonders bevorzugt zumindest der Schutzart IP64 entspricht, wobei das Gehäuse bevorzugt eine Aufstellvorrichtung (171), besonders bevorzugt ein Stativ, umfasst.

9. Verfahren (300) zur markierungsfreien Hangüberwachung und/oder Bauüberwachung mit den folgenden Schritten:
• Aufnehmen (310) von mosaikartigen, überlappenden Einzelbildern des gesamten Beobachtungsbereichs in mehreren Vergrößerungsstufen in regelmäßigen Zeitabständen durch zumindest eine Kamera (110);
• Zusammensetzen (320) der Einzelbilder eines Zeitpunktes zu jeweils einem Gesamtbild mit mehreren Ebenen, die den Vergrößerungsstufen entsprechen, durch eine Recheneinheit (120), wobei die Einzelbilder einer Ebene an den Bildern der Ebene der jeweils nächstgeringeren Vergrößerungsstufe ausgerichtet werden und
• Speichern (330) der Gesamtbilder durch die Recheneinheit (120) in einem Datenspeicher (130).

10. Verfahren (300) gemäß Anspruch 9,
**dadurch gekennzeichnet, dass** das Aufnehmen (310)
durch zumindest zwei Kameras (110) aus unterschiedlichen Blickwinkeln erfolgt, wobei die Recheneinheit (120) bevorzugt
• aus den Bildern der Kameras die Berechnung (311) einer dreidimensionalen Darstellung des Beobachtungsbereichs durchführt, wobei besonders bevorzugt das Hangvolumen und/oder Bauvolumen im Beobachtungsbereich berechnet und meist bevorzugt eine Übermittlung (312) des berechneten Hangvolumens und/oder Bauvolumens an ein Enterprise-Resource-Planning-System durchgeführt wird und/oder
• mit Hilfe der Bilder von zumindest einer am Rand des Beobachtungsbereichs angebrachten Markierung die Ermittlung (313) der Relativposition der Kameras zueinander und zum Beobachtungsbereich durchführt.

11. Verfahren (300) gemäß einem der Ansprüche 9 - 10,
**dadurch gekennzeichnet, dass** die Einzelbilder beim Zusammensetzen (320) durch manuell gesetzte Ankerpunkte und/oder automatisch durch Kontrastdetektion, bevorzugt Feature Detection, ausgerichtet werden.

12. Verfahren (300) gemäß einem der Ansprüche 9 - 11,
**dadurch gekennzeichnet, dass** das Speichern (330) der Gesamtbilder
• in Form von Videodateien erfolgt und/oder
• synchron mit Hilfsdaten, bevorzugt Wetterdaten, seismischen Daten, Daten zum Bauverlauf, Verkehrsdaten und/oder anderen mit den Bilddaten in Beziehung stehenden Daten, erfolgt, die von wenigstens einem lokalen Sensor und/oder aus wenigstens einer Datenbank abgerufen werden.

13. Verfahren (300) gemäß einem der Ansprüche 9 - 12,
**dadurch gekennzeichnet, dass**
ein Vergleich (340) zu unterschiedlichen Zeitpunkten aufgenommener Gesamtbilder durchgeführt wird, wobei der Vergleich (340) der Gesamtbilder bevorzugt
• zunächst auf der Ebene geringster Vergrößerung erfolgt und in Ebenen höherer Vergrößerung nur Bereiche untersucht werden, die bereits bei geringerer Vergrößerung Unterschiede zeigen, und/oder
• durch automatische Bewegungserkennung und/oder Bewegungsquantifizierung erfolgt, wobei besonders bevorzugt Methoden der Computer Vision eingesetzt werden, und/oder die Auswertung in Echtzeit erfolgt.

14. Verfahren (300) gemäß Anspruch 13,
**dadurch gekennzeichnet, dass**
bei Unterschieden zwischen den Gesamtbildern die Ausgabe (350) einer Warnmeldung ausgelöst wird, wobei die Ausgabe (350) der Warnmeldung bevorzugt
• zusammen mit den von Unterschieden betroffenen Gesamtbildern und/oder zugehörigen Hilfsdaten erfolgt, wobei besonders bevorzugt die von Unterschieden betroffenen Bildbereiche markiert werden und/oder
• in unterschiedlichen Warnstufen abhängig von der Menge der gefundenen Unterschiede erfolgt.

15. Verfahren (300) gemäß einem der Ansprüche 9 - 14,
**dadurch gekennzeichnet, dass**
eine Übermittlung (360) der Bilddaten, daraus abgeleiteter Metadaten, bevorzugt erkannter Bewegungsmuster, und/oder Hilfsdaten zusammen mit zugehörigen geologischen Beurteilungen in eine Datenbank (210) erfolgt, wobei die Datenbank (210) bevorzugt zur automatischen Beurteilung (370) der einer Warnmeldung zugrundeliegenden Daten genutzt wird, wobei besonders bevorzugt lernfähige Algorithmen eingesetzt werden.

16. Verfahren (300) gemäß einem der Ansprüche 9 - 15,
**dadurch gekennzeichnet, dass**
eine Übermittlung (380) der gespeicherten und/oder aktuellen Bilddaten, daraus abgeleiteter Metadaten, bevorzugt Bewegungsmuster, und/oder Hilfsdaten, bevorzugt drahtlos, besonders bevorzugt mittels UMTS und/oder LTE, an einen mit dem Internet verbundenen Server (220) erfolgt.

17. Verfahren (300) gemäß einem der Ansprüche 9 -16,
**dadurch gekennzeichnet, dass**
zumindest eine Kamera (110) an wenigstens einer den Beobachtungsbereich überragenden Konstruktion (230), bevorzugt an einem Kran, Ballon und/oder Gebäude, besonders bevorzugt an der Katze eines Krans, so angebracht ist, dass die von der Kamera aufgenommenen Bilder im Wesentlichen Aufsichten des Beobachtungsbereichs zeigen.

## Claims

1. Device (100) for marking-free slope monitoring and / or building inspection with at least one camera (110), a computing unit (120), a data memory (130) and a communication unit (140) which are communicatively connected to one another, wherein
• the camera (100) is designed for the mosaic-like recording of overlapping individual images of the entire observation area at several magnification levels, and
• the computing unit (120) is designed to compose from the individual images at different magnification levels an overall image with layers corresponding to the magnification levels, and
• the computing unit (120) comprises a data interface (121), which is designed to record auxiliary data, selected from weather data, seismic data and traffic data, synchronized with the image data from the camera (110).

2. Device (100) according to claim 1,
**characterized in that**
the camera (110)
• is designed in such a way that the entire observation area can be covered by a single image at the lowest magnification level;
• is pivotable and / or tiltable, preferably a pan-tilt zoom camera, and / or
• comprises an optical element (111), preferably with an anti-fog device, particularly preferably a coating and / or a heater, and / or a rain cover.

3. Device (100) according to one of the preceding claims,
**characterized in that**
the communication unit (140) is designed for wireless communication, preferably using known communication protocols, mostly preferably using WLAN, UMTS and / or LTE.

4. Device (100) according to one of the preceding claims,
**characterized in that**
the device (100) comprises an autarkic energy supply (150), which is preferably designed for the use of wind energy and / or solar energy.

5. Device (100) according to one of the preceding claims,
**characterized in that**
the device (100) comprises at least one weather sensor (160), selected from a precipitation sensor, temperature sensor, humidity sensor and wind sensor.

6. Device (100) according to one of the preceding claims,
**characterized in that**
the device (100) is enclosed by a housing (170) which is preferably dust-tight and / or weatherproof and particularly preferably at least corresponds to protection class IP64, the housing preferably comprising a setting up device, particularly preferably a tripod.

7. System (200) for marking-free slope monitoring and / or building inspection with at
least one device (100) according to one of claims 1 to 6,
**characterized in that**
a number of further cameras (110), which are designed for the mosaic-like recording of overlapping individual images of the entire observation area at several magnification levels, is communicatively connected to the device (100).

8. System (200) according to claim 7,
**characterized in that**
at least one of the further cameras (110)
• is designed in such a way that the entire observation area can be covered by a single image at the lowest magnification level;
• is pivotable and / or tiltable, preferably a pan-tilt zoom camera;
• comprises an optical element (111), preferably with an anti-fog device, particularly preferably a coating and / or a heater, and / or a rain cover;
• comprises an autarkic energy supply (150), which is preferably designed for the use of wind energy and / or solar energy; and / or
• is enclosed by a housing (170) which is preferably dust-tight and / or weatherproof and particularly preferably at least corresponds to protection class IP64, the housing preferably comprising a set-up device (171), particularly preferably a tripod.

9. Method (300) for marking-free slope monitoring and / or building inspection with the following steps:
• Recording (310) of mosaic-like, overlapping single images of the entire observation area at several magnification levels at regular time intervals by at least one camera (110);
• Composition (320) of the individual images of a point in time to form an overall image with several layers corresponding to the magnification levels by a computing unit (120), the individual images of a layer being aligned at the images of the layer of the next lower magnification level and
• Storage (330) of the overall images by the computing unit (120) in a data memory (130).

10. Method (300) according to claim 9,
**characterized in that**
the recording (310) is carried out by at least two cameras (110) from different viewing angles, the computing unit (120) preferably
• calculating (311) a three-dimensional representation of the observation area from the images of the cameras, particularly preferably calculating the slope volume and / or building volume in the observation area and mostly preferably transmitting (312) the calculated slope volume and / or building volume to an enterprise resource planning system and / or
• determining (313) the relative position of the cameras to one another and to the observation area with the aid of the images of at least one marking arranged at the edge of the observation area.

11. Method (300) according to one of claims 9-10,
**characterized in that**
the individual images are aligned during the assembly (320) by manually set anchor points and / or automatically by contrast detection, preferably feature detection.

12. Method (300) according to one of claims 9-11,
**characterized in that**
the storage (330) of the overall images
• takes place in the form of video files and / or
• takes place synchronously with auxiliary data, preferably weather data, seismic data, data on the course of construction, traffic data and / or other data related to the image data, which are retrieved from at least one local sensor and / or from at least one database.

13. Method (300) according to one of claims 9-12,
**characterized in that**
a comparison (340) of overall images recorded at different points in time is carried out, the comparison (340) of the overall images preferably
• is initially carried out at the level of the lowest magnification and, in levels of higher magnification, only areas are examined which already show differences at lower magnification, and / or
• takes place by automatic motion detection and / or motion quantification, with computer vision methods being particularly preferably used, and / or the evaluation taking place in real time.

14. Method (300) according to claim 13,
**characterized in that**
if there are differences between the overall images, the output (350) of a warning message is triggered, the output (350) of the warning message preferably
• takes place together with the overall images affected by differences and / or associated auxiliary data, with the image areas affected by differences being particularly preferably marked and / or
• takes place in different warning levels depending on the number of differences found.

15. Method (300) according to one of claims 9-14,
**characterized in that**
the image data, metadata derived therefrom, preferably recognized movement patterns, and / or auxiliary data together with associated geological assessments are transmitted to a database (210), wherein the database (210) is preferably used for automatic assessment (370) of the data on which a warning message is based, with automatic learning algorithms being particularly preferably used.

16. Method (300) according to one of claims 9-15,
**characterized in that**
a transmission (380) of the stored and / or current image data, metadata derived therefrom, preferably movement patterns, and / or auxiliary data, to a server (220) connected to the Internet takes place, preferably wirelessly, particularly preferably by means of UMTS and / or LTE..

17. The method (300) according to any one of claims 9-16,
**characterized in that**
at least one camera (110) is arranged on at least one structure (230) protruding above the observation area, preferably on a crane, balloon and / or building, particularly preferably on the travelling trolley of a crane, so that the images recorded by the camera show essentially top views of the observation area.

## Revendications

1. Dispositif (100) de surveillance de pente et / ou de bâtiment sans marquage avec au moins une caméra (110), une unité de calcul (120), une mémoire de données (130) et une unité de communication (140) qui sont connectées en communication l'une à l'autre,
**caractérisé en ce que**
• la caméra (100) est conçue pour l'enregistrement d'images individuelles en mosaïque qui se chevauchent de toute la zone d'observation à plusieurs niveaux de grossissement ; et
• l'unité de calcul (120) est conçue pour composer une image globale à partir des images individuelles de différents niveaux de grossissement avec des calques correspondant aux niveaux de grossissement ; et
• l'unité de calcul (120) comprend une interface de données (121) qui est conçue pour enregistrer des données auxiliaires, choisies parmi des données météorologiques, des données sismiques et des données de trafic, synchronisées avec les données d'image de la caméra (110).

2. Dispositif (100) selon la revendication 1,
**caractérisé en ce que**
la caméra (110)
• est conçue de manière que toute la zone d'observation puisse être couverte par une seule image au niveau de grossissement le plus faible ;
• est pivotante et / ou inclinable, de préférence une caméra pan tilt zoom, et / ou
• comprend un élément optique (111), de préférence avec un dispositif anti-buée, de manière particulièrement préférée un revêtement et / ou un élément chauffant, et / ou une protection de pluie.

3. Dispositif (100) selon l'une des revendications précédentes,
**caractérisé en ce que**
l'unité de communication (140) est conçue pour une communication sans fil,
de préférence en utilisant des protocoles de communication connus, le plus préféré en utilisant WLAN, UMTS et / ou LTE.

4. Dispositif (100) selon l'une des revendications précédentes,
**caractérisé en ce que**
le dispositif (100) comprend une alimentation en énergie autarcique (150), qui est de préférence conçue pour l'utilisation de l'énergie éolienne et / ou solaire.

5. Dispositif (100) selon l'une des revendications précédentes,
**caractérisé en ce que**
le dispositif (100) comprend au moins un capteur météorologique (160), choisi parmi un capteur de précipitations, un capteur de température, un capteur d'humidité et un capteur de vent.

6. Dispositif (100) selon l'une des revendications précédentes,
**caractérisé en ce que**
le dispositif (100) est enfermé par un boîtier (170), de préférence étanche à la poussière et / ou aux intempéries et de manière particulièrement préférée au moins correspondant à la classe de protection IP64, le boîtier comprenant de préférence un dispositif de mise en place, de manière particulièrement préférée un trépied.

7. Système (200) de surveillance de pente et / ou de bâtiment sans marquage
avec au moins un dispositif (100) selon l'une des revendications 1 à 6, **caractérisé en ce qu'**
un certain nombre d'autres caméras (110), qui sont conçues pour l'enregistrement en mosaïque d'images individuelles qui se chevauchent de toute la zone d'observation en plusieurs niveaux de grossissement, sont connectés en communication au dispositif (100).

8. Système (200) selon la revendication 7,
**caractérisé en ce qu'**
au moins une des autres caméras (110)
• est conçue de manière que toute la zone d'observation puisse être couverte par une seule image au niveau de grossissement le plus faible ;
• est pivotante et / ou inclinable, de préférence une caméra zoom pan tilt ;
• comprend un élément optique (111), de préférence avec un dispositif anti-buée, de manière particulièrement préférée un revêtement et / ou un élément chauffant, et / ou une protection de pluie ;
• comprend une source d'énergie autarcique (150) qui est de préférence conçue pour l'utilisation de l'énergie éolienne et / ou solaire et / ou
• est enfermé par un boîtier (170), de préférence étanche à la poussière et / ou aux intempéries et de manière particulièrement préférée au moins correspondant à la classe de protection IP64, le boîtier comprenant de préférence un dispositif de mise en place (171), de manière particulièrement préférée un trépied.

9. Procédé (300) pour la surveillance d'une pente et / ou d'un bâtiment sans marquage avec les étapes suivantes :
• Enregistrement (310) d'images individuelles en mosaïque qui se chevauchent de toute la zone d'observation à plusieurs niveaux de grossissement à des intervalles de temps réguliers par au moins une caméra (110) ;
• Composition (320) des images individuelles d'un point dans le temps pour former une image globale à plusieurs calques correspondant aux niveaux de grossissement par une unité de calcul (120), les images individuelles d'un calque étant alignées aux images du calque du niveau de grossissement inférieur suivant et
• Stockage (330) des images globales par l'unité de calcul (120) dans une mémoire de données (130).

10. Procédé (300) selon la revendication 9,
**caractérisé en ce que**
l'enregistrement (310) est réalisé par au moins deux caméras (110) sous des angles de vue différents, l'unité de calcul (120) de préférence
• calculant (311) une représentation tridimensionnelle de la zone d'observation à partir des images des caméras, de manière particulièrement préférée en calculant le volume de la pente et / ou du bâtiment dans la zone d'observation et de manière la plus préférée en transmettant (312) le volume de la pente et / ou du bâtiment calculé à un progiciel de gestion intégré et / ou
• effectuant à l'aide des images d'au moins un marquage placé au bord de la zone d'observation, la détermination (313) de la position relative des caméras entre elles et par rapport à la zone d'observation.

11. Procédé (300) selon l'une des revendications 9 à 10,
**caractérisé en ce que**
les images individuelles sont alignées pendant l'assemblage (320) par des points d'ancrage définis manuellement et / ou automatiquement par détection de contraste, de préférence par détection de zones d'intérêt.

12. Procédé (300) selon l'une des revendications 9 à 11,
**caractérisé en ce que**
le stockage (330) des images globales
• prend la forme de fichiers vidéo et / ou
• est effectué de manière synchrone avec des données auxiliaires, de préférence des données météorologiques, des données sismiques, des données sur le déroulement des travaux, des données de trafic et / ou d'autres données liées aux données d'image, qui sont extraites d'au moins un capteur local et / ou d'au moins une base de données.

13. Procédé (300) selon l'une des revendications 9 à 12,
**caractérisé en ce qu'**
une comparaison (340) des images globales enregistrées à des instants différents est effectuée, la comparaison (340) des images globales de préférence
• se déroulant initialement au niveau de grossissement le plus faible et, aux niveaux de grossissement plus élevés, seules les zones qui présentent des différences à un grossissement plus faible sont examinées, et / ou
• s'effectuant par détection automatique de mouvement et / ou quantification automatique de mouvement, de manière particulièrement préférée les méthodes de vision par ordinateur étant utilisées et / ou l'évaluation se déroulant en temps réel.

14. Procédé (300) selon la revendication 13,
**caractérisé en ce que**
s'il existe des différences entre les images globales, la sortie (350) d'un message d'avertissement est déclenchée, la sortie (350) du message d'avertissement de préférence
• ayant lieu avec les images globales affectées par les différences et / ou les données auxiliaires associées, les zones d'image affectées par les différences étant de manière particulièrement préférée marquées et / ou
• se déroulant à différents niveaux d'avertissement en fonction du nombre de différences constatées.

15. Procédé (300) selon l'une des revendications 9 à 14,
**caractérisé en ce que**
les données d'image, des métadonnées qui en découlent, de préférence des schémas de mouvement reconnus, et / ou des données auxiliaires sont transmises avec les évaluations géologiques associées à une base de données (210), la base de données (210) étant de préférence utilisée pour l'évaluation automatique (370) des données sur lesquelles un message d'avertissement est basé, des algorithmes d'apprentissage automatique étant utilisés de manière particulièrement préférée.

16. Procédé (300) selon l'une des revendications 9 à 15,
**caractérisé en ce qu'**
une transmission (380) des données d'image stockées et / ou actuelles, de métadonnées qui en dérivent, de préférence de schémas de mouvement, et / ou de données auxiliaires, à un serveur (220) connecté à Internet a lieu, de préférence sans fil, de manière particulièrement préférée au moyen d'UMTS et /ou LTE.

17. Procédé (300) selon l'une des revendications 9 à 16,
**caractérisé en ce qu'**
au moins une caméra (110) est montée sur au moins une structure (230) faisant saillie au-delà de la zone d'observation, de préférence sur une grue, un ballon et / ou un bâtiment, de manière particulièrement préférée sur le chariot de pont roulant de la grue, de telle sorte que les images enregistrées par la caméra montrent essentiellement des vues de dessus de la zone d'observation.
